# EUROPÄISCHE PATENTSCHRIFT

(11) **EP 1 320 082 B1**
(45) Veröffentlichungstag und Bekanntmachung des Hinweises auf die Patenterteilung: **31.08.2011**
(21) Anmeldenummer: 02023845.7
(22) Anmeldetag: 24.10.2002
(51) Int. Cl.: G08G 1/16, B60Q 1/52, G01S 13/00

(54) **Kraftfahrzeug mit einem akustischen und/oder optischen Abstands-Warnsystem**
Motor vehicule having an acoustic and/or optical distance warning system
Véhicule équipé d'un sytème acoustique et/ou optique d'avertissement de distance

(30) Priorität: 14.12.2001 DE 10161567
(43) Veröffentlichungstag der Anmeldung: 18.06.2003
(73) Patentinhaber: AUDI AG, 85045 Ingolstadt (DE)
(72) Erfinder: Gollewski, Torsten, 85101 Lenting (DE); Hofbauer, Manfred, 85092 Kösching (DE)
(74) Vertreter: Thielmann, Frank

(56) Entgegenhaltungen:
- EP-A- 1 035 509
- DE-A- 19 818 259
- DE-A- 19 937 489
- JP-A- 8 110 224
- PATENT ABSTRACTS OF JAPAN Bd. 1996, Nr. 08, 30. August 1996 (1996-08-30) & JP 8 110224 A (MITSUBISHI MOTORS CORP), 30. April 1996 (1996-04-30)
- PATENT ABSTRACTS OF JAPAN Bd. 1996, Nr. 10, 31. Oktober 1996 (1996-10-31) & JP 8 152330 A (MITSUBISHI ELECTRIC CORP), 11. Juni 1996 (1996-06-11)

## Beschreibung

Die Erfindung betrifft ein Kraftfahrzeug mit einem akustischen und/oder optischen Abstands-Warnsystem umfassend mehrere Abstandssensoren und wenigstens eine optische und/oder akustische Alarmeinrichtung.

Als ein Abstands-Warnsystem bei einem Kraftfahrzeug sind sogenannte APS-Einparkhilfen (APS = Acoustic Parking System) bekannt. Ein solches System umfasst mehrere in der Regel in dem vorderen und hinteren Stoßfänger untergebrachte Sensoren, die beim Einparken ein sich näherndes Hindernis, z.B. ein stehendes anderes Kraftfahrzeug, erkennen. Unterschreitet der hierüber gemessene Abstand des eigenen Kraftfahrzeugs zum Hindernis einen bestimmten Mindestabstand, so wird über eine geeignete Alarmeinrichtung ein Alarmsignal gegeben, z.B. durch ein optisches Blinkzeichen oder einen akustischen Warnton. Der Fahrer kann auf diese Weise relativ sicher auch in enge Parklücken manövrieren, ohne gegen das Hindernis zu stoßen, auch ist es ihm möglich, das vorhandene Platzangebot aufgrund der Abstandswarnung optimal ausnutzen zu können.

Das Einparken stellt für viele Kraftfahrer eine relativ schwierige Situation dar, da ein sehr geringes Platzangebot zum Manövrieren vorhanden ist und bei einer fehlerhaften Bewegung des Kraftfahrzeugs eine Beschädigung des eigenen oder eines anderen Kraftfahrzeugs oder dergleichen eintreten kann. Eine ähnliche, im Regelfall noch problematischere Situation stellt sich für den Kraftfahrer beim Durchfahren einer Fahrbahnengstelle dar. Eine solche Fahrbahnengstelle kann z.B. eine Baustellendurchfahrt auf einer Autobahn oder einer sonstigen Straße sein, wo die Fahrbahn aufgrund der Bauarbeiten deutlich verengt ist. Vor allem bei Autobahnbaustellen wird die sonst übliche Spurbreite von ca. 2,5 m deutlich innerhalb der Engstellenstrecke verringert.

Zumeist sind links und/oder rechts fahrbahnbegrenzende Betonelemente positioniert. Der Abstand zu einem solchen seitlichen Begrenzungselement sowie zu einem auf der anderen Seite befindlichen Hindernis, z.B. ebenfalls ein solches Element oder ein anderes Kraftfahrzeug, beträgt oft nur wenige Zentimeter. Für den Kraftfahrer bedeutet eine solche Fahrbahnengstellendurchfahrt ein Höchstmaß an Konzentration, um ein Touchieren und damit einen Unfall zu vermeiden. Ähnliches gilt auch bei Tunneldurchfahrten oder dergleichen, wo sich das Fahrzeug zumindest an einer Seite ebenfalls relativ nahe an der Tunnelwand entlang bewegt.

Aus der EP 1 035 509 ist ein Spurhaltesystem mit Alarmeinrichtung bekannt.

Der Erfindung liegt das Problem zugrunde, ein Kraftfahrzeug anzugeben, das dem Fahrer auch beim Durchfahren einer solchen Fahrbahnengstelle eine Hilfsmöglichkeit für eine sichere Durchfahrt bietet.

Zur Lösung des Problems zeichnet sich ein erfindungsgemäßes Kraftfahrzeug dadurch aus, dass Mittel zur Ermittlung der Spurbreite der befahrenen Fahrbahn und/oder zur Ermittlung von die Fahrspur seitlich begrenzenden Elementen vorgesehen sind, wobei abhängig vom Ermittlungsergebnis das Abstands-Warnsystem zur Durchführung einer Abstandsmessung aktivierbar ist.

Beim erfindungsgemäßen Kraftfahrzeug sind mit besonderem Vorteil Mittel vorgesehen, die entweder die Erfassung der Spurbreite der befahrenen Fahrbahn oder aber (gegebenenfalls auch zusätzlich) von die Fahrspur seitlich begrenzenden Elementen ermöglichen. Es erfolgt also während des Fahrbetriebs des Fahrzeugs eine kontinuierliche Fahrspurerfassung, um kontinuierlich zu detektieren, wie die tatsächliche Spurbreite bemessen ist. Ergibt sich, dass die Spurbreite kritisch ist oder dass seitliche Elemente beachtlich nahe zum Fahrzeug stehen, so erfolgt vorteilhaft automatisch die Aktivierung des Abstands-Warnsystems, das unter Verwendung der systemeigenen Abstandssensoren eine echte Abstandsmessung vornimmt und im Falle einer Gefahrensituation eine Alarmierung des Fahrers vornimmt. Der Fahrer ist also nicht genötigt, beispielsweise manuell das Abstands-Warnsystem zuzuschalten, was vor allem in einer plötzlich auftretenden Stresssituation häufig vergessen wird, z.B. wenn relativ unvorhergesehen in eine Baustelle oder dergleichen eingefahren wird. Als Abstands-Warnsystem kann hierbei beispielsweise das eingangs genannte Acoustic Parking System verwendet werden, wobei - da es bei dem erfindungsgemäßen Kraftfahrzeug zur Erfassung eines kritischen Abstands während des üblichen Vorwärtsfahrbetriebs verwendet wird - die Abstandssensoren im vorderen Stoßfängerbereich angeordnet sind. Denkbar ist auch, die Sensoren eines sogenannten ACC-Systems (ACC = Adaptive Cruise Control) einzusetzen. Bei einem solchen System wird über die Sensoren ein Mindestabstand zum vorausfahrenden Fahrzeug erfasst und durch eine geeignete Regelung automatisch eingeregelt. Insgesamt sind alle Sensoren verwendbar, die in geeigneter Weise eine Vorfelderfassung, also einer Erfassung der Fahrspur vor und im Seitenbereich des Fahrzeugs zulassen.

Die Mittel zur Ermittlung der Spurbreite und/oder der Elemente können nach einer vorteilhaften Weiterbildung des Erfindungsgedankens eine Kamera mit zugeordneter Bildverarbeitungseinrichtung zum Analysieren eines aufgenommenen Bilds hinsichtlich der Spurbreite und/oder der Elemente umfassen. Mittels der Kamera, die zweckmäßigerweise im windschutzscheibennahen Bereich nach vorne ausgerichtet angeordnet ist, wird kontinuierlich das Vorfeld des Fahrzeugs aufgenommen. Die Bildverarbeitungseinrichtung nimmt kontinuierlich eine Bildanalyse vor. Hierbei werden z.B. die seitlichen Fahrspurstreifen erfasst, also beispielsweise die seitlich durchgezogenen oder gestrichelten Linien, die die befahrene Fahrspur begrenzen. Hierzu sind geeignete Analysealgorithmen vorgesehen, die z.B. durch Vergleich von Grauwerten oder im Rahmen einer Kantendetektion etc. die entsprechenden Bildmerkmale analysieren. Entsprechend werden auch seitlich begrenzende Elemente erfasst, auch dies geschieht allein auf Basis einer Bildanalyse. Stellt sich hierbei heraus, dass eine Fahrbahnverengung unmittelbar bevorsteht, so wird anhand dieses Ermittlungsergebnisses automatisch das Abstands-Warnsystem aktiviert, das dann während der Einfahrt und Durchfahrt durch den verengten Bereich aktiv ist. Nähert sich das Fahrzeug dann beispielsweise einem seitlichen begrenzenden Element zu stark, so wird der Warnton ausgegeben.

Alternativ oder zusätzlich können die Mittel auch eine Radareinrichtung mit zugeordneter Signalverarbeitungseinrichtung zur Ermittlung der Spurbreite und/oder zum Erfassen der Elemente umfassen. Eine solche Radareinrichtung ist insbesondere zur Erfassung etwaiger Hindernisse wie seitliche Begrenzungselemente oder Fahrzeuge zweckmäßig. Die Radareinrichtung, die ebenfalls im vorderen Fahrzeugbereich angeordnet ist, kann auch unterstützend zum Erfassungsergebnis der Spurbreitenkamera arbeiten.

In jedem Fall ist es zweckmäßig, wenn den Mitteln eine das Ermittlungsergebnis empfangende Auswerteeinrichtung zum Vergleichen des Ermittlungsergebnisses mit einem Vergleichsdatum und zum Aktivieren des Abstands-Warnsystems in Abhängigkeit des Vergleichs zugeordnet ist. Diese Auswerteeinrichtung analysiert und bewertet die Situation anhand des Erfassungsergebnisses oder der Erfassungsergebnisse (wenn sowohl die Kamera mit nachgeschalteter Bildverarbeitungseinrichtung und die Radareinrichtung mit zugeordneter Signalverarbeitungseinrichtung vorgesehen ist) und aktiviert je nach Ergebnis das Abstand-Warnsystem.

Nach einer vorteilhaften Weiterbildung des Erfindungsgedankens kann vorgesehen sein, dass wenigstens ein Sensorelement zur Erfassung eines oder mehrerer Betriebsparameter des Fahrzeugs vorgesehen ist, und dass die Auswerteeinrichtung zur Berücksichtigung der hierüber gelieferten Erfassungsinformationen im Rahmen der Beurteilung der Aktivierung des Abstands-Warnsystems ausgebildet ist. Die Analyse und Bewertung sowie die letztendliche Aktivierung kann also auch auf wenigstens einem weiteren Betriebsparameter basieren, wobei hier beispielsweise die aktuelle Geschwindigkeit des Fahrzeugs gemessen werden kann, das Sensorelement ist also als Geschwindigkeitssensor ausgebildet. In einem solchen Fall kann beispielsweise die Aktivierung des Abstands-Warnsystems nur dann erfolgen, wenn die Ist-Geschwindigkeit kleiner als eine Soll-Geschwindigkeit ist. Beispielsweise kann das System nur eingeschaltet werden, wenn die Ist-Geschwindigkeit ≤ 50 km/h ist, da ansonsten irgendwelche Warnsignale irritierend sein können.

Weitere Vorteile, Merkmale und Einzelheiten der Erfindung ergeben sich aus dem im folgenden beschriebenen Ausführungsbeispiel sowie anhand der Zeichnung.

In dieser ist eine Prinzipskizze der Systemarchitektur eines erfindungsgemäßen Kraftfahrzeugs gezeigt. Dargestellt ist ein erstes Mittel 1 zur Erfassung der Spurbreite und/oder gegebenenfalls etwaiger die Fahrspur seitlich begrenzender Elemente. Das Mittel 1 umfasst im gezeigten Beispiel eine Kamera 2, die - siehe das gezeigte Fahrzeug 3 - nach vorne zur Windschutzscheibe hinausblickt. Der Kamera 2 ist eine Bildverarbeitungseinrichtung 4 zugeordnet, die aufgenommene Bilder der Kamera 2 analysiert und hierüber beispielsweise die Spurbreite, die z.B. durch seitliche Fahrbahnmarkierungsstreifen, oder aber beispielsweise zumindest an einer Seite durch den Grünstreifen etc. begrenzt wird, bestimmt, was durch geeignete Bildanalysealgorithmen erfolgen kann. Das Mittel 1 bzw. letztlich die Bildverarbeitungseinrichtung 4 ist mit einer Auswerteeinrichtung 5 verbunden, die das Erfassungsergebnis der Bildverarbeitungseinrichtung 4 empfängt und analysiert. Das Erfassungsergebnis kann beispielsweise dergestalt sein, dass die erfasste Fahrspurbreite mit einem bestimmten Wert, z.B. 2,5 m, angegeben wird. Dies kann relativ genau aufgrund der Bildanalyse ermittelt werden. In der Auswerteeinrichtung 5 erfolgt nun beispielsweise ein Vergleich mit einem Vergleichswert, der u.a. auch die Fahrzeugbreite berücksichtigt. Dieser Vergleich geht anschließend in eine die gegebene Situation endgültig bewertende Situationsbewertung ein, abhängig von welcher etwaige weitere Schritte erfolgen können.

Ferner ist ein weiteres Mittel 6 umfassend eine Radareinrichtung 7 mit zugeordneter Signalverarbeitungseinrichtung 8 vorgesehen. Dieses Mittel 6, das optional vorgesehen sein kann, ermöglicht eine Erfassung der Fahrspur und eine eindeutige Detektion etwaiger seitlich begrenzender Hindernisse wie beispielsweise der bekannten Betonseitenelemente, von Absperrbaken oder aber von seitlich fahrenden Kraftfahrzeugen. Die gelieferten Radarsignale werden von der Signalverarbeitungseinrichtung 8 empfangen und entsprechend ausgewertet und das Ermittlungsergebnis hinsichtlich der Detektion etwaiger begrenzender Elemente ebenfalls an die Auswerteeinrichtung 5 gegeben.

Weiterhin ist ein drittes Mittel 9 umfassend im gezeigten Beispiel mehrere Sensorelemente 10 sowie eine entsprechende Auswerteeinrichtung 11 vorgesehen. Diese Sensorelemente 10 dienen zur Erfassung etwaiger Betriebsparameter des Fahrzeugs, beispielsweise der Geschwindigkeit, die dann in der Auswerteeinrichtung 11 genau bestimmt wird. Das Ergebnis wird ebenfalls an die Auswerteeinrichtung 5 gegeben. Als Sensoren können jedwede Sensoren verwendet werden, die eine oder mehrere Betriebsparameter des fahrenden Fahrzeugs erfassen, welche relevant für die seitens der Auswerteeinrichtung 5 erfolgende Situationsanalyse und -bewertung sind. Beispielsweise kann hierfür auf die ESP-Sensorik (ESP = elektronisches Stabilitätsprogramm) zurückgegriffen werden, wo eine Reihe von Betriebsparametern erfasst werden. Man nutzt also hier bereits vorhandene Sensorik aus, um relevante Daten zu sammeln.

Wie beschrieben werden sämtliche über die Mittel 1, 6 und 9 erfassten Daten an die Auswerteeinrichtung 5 gegeben, die basierend hierauf die Situation analysiert und bewertet. Im Falle der Spurbreitedaten erfolgt wie beschrieben beispielsweise ein Vergleich mit einem Vergleichswert. Liegt der analysierte Spurbreitenwert über dem Vergleichswert, so wird zumindest hinsichtlich der Spurbreite, soweit sie über das Mittel 1 erfasst wird, eine Aktivierung eines nachgeschalteten Abstands-Warnsystems nicht erforderlich sein. Ist jedoch der ermittelte Spurbreitenwert kleiner als der Vergleichswert, so kann dies bereits Grundlage für eine Aktivierung sein. Ähnlich verhält es sich mit dem Wert, den das Mittel 6 liefert. Ergibt dieser Wert das relativ nah beabstandete seitliche Begrenzungselement wie die genannten Betonwände etc. in Kürze auftauchen (sowohl die Kamera 2 als auch das Radar 7 erfassen jeweils einen dem Fahrzeug einige Meter vorgelagerten Bereich), so kann auch in Abhängigkeit dieser Kenntnis die nachfolgende Aktivierung erfolgen. Handelt es sich bei den über die Sensorelemente 10 gelieferten Daten um Geschwindigkeitsdaten, so kann generell eine Aktivierung des Abstands-Warnsystems beispielsweise nur dann erfolgen, wenn die Ist-Geschwindigkeit, die über die Sensorelemente 10 erfasst wird, kleiner als ein Vergleichswert ist. Ist die Ist-Geschwindigkeit größer als der Vergleichswert, so kann eine Aktivierung des Abstands-Warnsystems auch dann unterdrückt werden, wenn beide Mittel 1 und 6 Erfassungsergebnisse liefern, die eigentlich eine Aktivierung des Abstands-Warnsystems auslösen würden.

Ergibt die Auswertung der übertragenen Ermittlungsergebnisse in der Auswerteeinrichtung 5, dass eine Gefahrensituation in Kürze eintritt oder bereits eingetreten ist, so wird ein elektronisches Abstands-Warnsystem 12 aktiviert. Dieses Abstands-Warnsystem 12 umfasst im gezeigten Bespiel mehrere im vorderen Fahrzeugbereich, vornehmlich im Stoßfänger vorgesehene Abstandssensoren 13, die nach vorne und etwas zur Seite mit ihrem Wirkungs- oder Erfassungsbereich ausgerichtet sind. Auf diese Weise können seitliche Hindernisse wie beispielsweise die Betonwände oder dort fahrende Fahrzeuge etc. bzw. der Abstand des Fahrzeugs zu diesen Hindernissen erfasst werden. Über eine dem Abstands-Warnsystem eigene Steuerungs- oder Regeleinrichtung wird je nachdem, welche Daten die Sensorelemente 13 liefern, bei zu geringem Abstand zu einem vorderen oder seitlichen Hindernis ein optisches Warnsignal 14 oder aber ein akustisches Warnsignal 15 gegeben, welche es dem Fahrer anzeigen, dass er sich bedrohlich nahe einem solchen Hindernis genähert hat.

An dieser Stelle ist darauf hinzuweisen, dass über die Auswerteeinrichtung 5 natürlich auch das Abstands-Warnsystem automatisch deaktiviert werden kann, wenn die über die Mittel 1, 6 und gegebenenfalls 9 gelieferten Ermittlungsergebnisse eine Zuschaltung des Abstands-Warnsystems nicht mehr erfordern, wenn also die Fahrbahnengstelle oder der Gefahrenbereich wieder verlassen wurde. Selbstverständlich besteht für den Fahrer auch die Möglichkeit, das automatisch zugeschaltete Abstands-Warnsystem durch Drücken eines geeigneten Betätigungselements 16 oder dergleichen manuell auszuschalten, wenn er es nicht benötigt. Die Auswerteeinrichtung 5 registriert dies und unterdrückt die Zuschaltung, so lange sich das Fahrzeug im aktuellen Gefahrenbereich oder im Bereich der aktuellen Fahrbahnengstelle bewegt. Wird beispielsweise nach einigen Kilometern eine erneute Fahrbahnengstelle befahren, so gilt das seinerzeit gegebene Ausschaltsignal nicht mehr, eine Aktivierung ist also grundsätzlich wieder möglich.

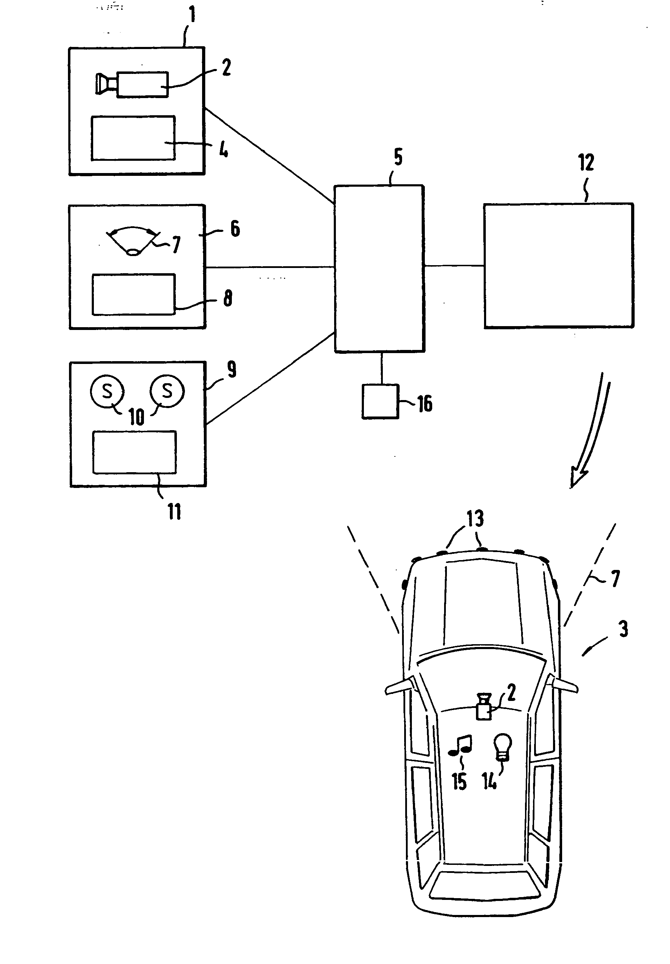

Abschließend ist darauf hinzuweisen, dass in Fig. 3 zum einen die Anordnung der Kamera 2 im Windschutzscheibenbereich sowie die Anordnung der Radareinrichtung 7 im vorderen Bereich des Fahrzeugs sowie deren Überwachungswinkelbereich dargestellt sind.

## Patentansprüche

1. Kraftfahrzeug mit einem akustischen und/oder optischen Abstands-Warnsystem umfassend mehrere Abstandssensoren und wenigstens eine optische und/oder akustische Alarmeinrichtung,
**dadurch gekennzeichnet,**
**dass** Mittel (1, 6) zur Ermittlung der Spurbreite der befahrenen Fahrbahn und/oder zur Ermittlung von die Fahrspur seitlich begrenzenden Elementen vorgesehen sind, wobei abhängig vom Ermittlungsergebnis das Abstands-Warnsystem (12) zur Durchführung einer Abstandsmessung in Betrieb setzbar ist.

2. Kraftfahrzeug nach Anspruch 1,
**dadurch gekennzeichnet,**
**dass** die Mittel (1) zur Ermittlung der Spurbreite und/oder der Elemente eine Kamera (2) mit zugeordneter Bildverarbeitungseinrichtung (4) zum Analysieren eines aufgenommenen Bilds hinsichtlich der Spurbreite und/oder der Elemente umfassen.

3. Kraftfahrzeug nach Anspruch 1 oder 2,
**dadurch gekennzeichnet,**
**dass** die Mittel (6), gegebenenfalls zusätzlich, eine Radareinrichtung (7) mit zugeordneter Signalverarbeitungseinrichtung (8) zur Ermittlung der Spurbreite und/oder Erfassen der Elemente umfassen.

4. Kraftfahrzeug nach einem der vorangehenden Ansprüche,
**dadurch gekennzeichnet,**
**dass** den Mitteln (1, 6, 9) eine das Ermittlungsergebnis empfangende Auswerteeinrichtung (5) zum Analysieren und/oder Vergleichen des Ermittlungsergebnis mit einem Vergleichsdatum und zum Aktivieren
des Abstands-Warnsystems (12) in Abhängigkeit des Vergleichs zugeordnet ist.

5. Kraftfahrzeug nach einem der vorangehenden Ansprüche,
**dadurch gekennzeichnet,**
**dass** wenigstens ein Sensorelement (10) zur Erfassung eines oder mehrerer Betriebsparameter des Fahrzeugs (3) vorgesehen sind, und dass die Auswerteeinrichtung (5) zur Berücksichtigung der hierüber gelieferten Erfassungsinformation im Rahmen der Beurteilung der Aktivierung des Abstands-Warnsystems (12) ausgebildet ist.

6. Kraftfahrzeug nach einem der vorangehenden Ansprüche,
**dadurch gekennzeichnet,**
**dass** das Sensorelement (10) die Geschwindigkeitssensoren zur Erfassung der Fahrzeuggeschwindigkeit ist, wobei die Aktivierung des Abstands-Warnsystems (12) in Abhängigkeit eines Vergleichs der Geschwindigkeitserfassung mit einem Sollwert erfolgt.

## Claims

1. Motor vehicle having an acoustic and/or optical distance warning system comprising a plurality of distance sensors and at least one optical and/or acoustic alarm device,
**characterized**
**in that** means (1, 6) for determining the lane width of the carriageway being travelled and/or for determining elements which laterally bound the lane are provided, wherein the distance warning system (12) can be activated as a function of the determination result in order to carry out a distance measurement.

2. Motor vehicle according to Claim 1,
**characterized**
**in that** the means (1) for determining the lane width and/or the elements comprise a camera (2) with assigned image-processing device (4) for analysing a recorded image with respect to the lane width and/or the elements.

3. Motor vehicle according to Claim 1 or 2,
**characterized**
**in that** the means (6) if appropriate additionally comprise a radar device (7) with assigned signalprocessing device (8) for determining the lane width and/or detecting the elements.

4. Motor vehicle according to one of the preceding claims,
**characterized**
**in that** an evaluation device (5) which receives the determination result and has the purpose of analysing and/or comparing the determination result with the comparison data and of activating the distance warning system (12) as a function of the comparison is assigned to the means (1, 6, 9).

5. Motor vehicle according to one of the preceding claims,
**characterized**
**in that** at least one sensor element (10) is provided for detecting one or more operating parameters of the vehicle (3), and in that the evaluation device (5) is designed to take into account the detection information, supplied about the latter, within the scope of the assessment of the activation of the distance warning system (12).

6. Motor vehicle according to one of the preceding claims,
**characterized**
**in that** the sensor element (10) comprises the speed sensors for detecting the speed of the vehicle, wherein the activation of the distance warning system (12) takes place as a function of a comparison of the detected speed with a setpoint value.

## Revendications

1. Véhicule automobile équipé d'un système acoustique et/ou optique d'avertissement de distance comprenant plusieurs capteurs de distance et au moins un dispositif d'alarme optique et/ou acoustique
**caractérisé en ce que**
des moyens (1, 6) sont prévus pour déterminer la largeur de piste de la voie de circulation utilisée et/ou pour déterminer les éléments limitant latéralement la piste de circulation, le système d'avertissement de distance (12) pouvant être mis en route en fonction du résultat de la détermination pour effectuer une mesure de distance.

2. Véhicule automobile selon la revendication 1,
**caractérisé en ce que**
les moyens (1) pour déterminer la largeur de piste et/ou des éléments comprennent une caméra (2) associée à un dispositif de traitement d'image (4) pour analyser une image enregistrée s'agissant de la largeur de piste et/ou des éléments.

3. Véhicule automobile selon la revendication 1 ou 2,
**caractérisé en ce que**
les moyens (6) comprennent éventuellement de plus un dispositif radar (7) associé à un dispositif de traitement de signaux (8) pour déterminer la largeur de piste et/ou pour enregistrer les éléments.

4. Véhicule automobile selon une des revendications précédentes, **caractérisé en ce que**
un dispositif de traitement (5) recevant le résultat de la détermination pour analyser et/ou comparer le résultat de la détermination avec une date de comparaison et pour activer le système d'avertissement de distance (12) en fonction de la comparaison, est affecté aux moyens (1, 6, 9).

5. Véhicule automobile selon une des revendications précédentes, **caractérisé en ce que**
au moins un élément capteur (10) est prévu pour l'enregistrement d'un ou de plusieurs paramètres de fonctionnement du véhicule automobile (3), et que le dispositif de traitement (5) est développé pour respecter l'information d'enregistrement fournie à ce sujet dans le cadre de l'appréciation de l'activation du système d'avertissement de distance (12).

6. Véhicule automobile selon une des revendications précédentes, **caractérisé en ce que**
l'élément capteur (10) est constitué de capteurs de vitesse pour enregistrer la vitesse du véhicule automobile, l'activation du système d'avertissement de distance (12) s'effectuant en fonction d'une comparaison de l'enregistrement de la vitesse avec une valeur de consigne.
